(19) **Europäisches Patentamt**
**European Patent Office**
**Office européen des brevets**

(11) **EP 2 569 997 B1**

(12) **EUROPEAN PATENT SPECIFICATION**

(45) Date of publication and mention
of the grant of the patent:
**10.04.2019 Bulletin 2019/15**

(51) Int Cl.:
***H04W 72/04*** *(2009.01)*   ***H04L 5/00*** *(2006.01)*
***H04W 72/08*** *(2009.01)*   ***H04W 24/10*** *(2009.01)*

(21) Application number: **11780830.3**

(22) Date of filing: **12.05.2011**

(86) International application number:
**PCT/KR2011/003526**

(87) International publication number:
**WO 2011/142613 (17.11.2011 Gazette 2011/46)**

(54) **METHOD AND SYSTEM OF ALLOCATING TIMESLOTS IN AN MULTIPLE USERS REUSING ONE TIMESLOT (MUROS) ENVIRONMENT**

VERFAHREN UND SYSTEM ZUM ZUWEISEN VON ZEITSLOTS IN EINER MEHRBENUTZERUMGEBUNG MIT WIEDERVERWENDUNG EINES ZEITSLOTS (MUROS-UMGEBUNG)

PROCÉDÉ ET SYSTÈME D'ALLOCATION DE CRÉNEAUX TEMPORELS DANS UN ENVIRONNEMENT À UTILISATEURS MULTIPLES RÉUTILISANT UN MÊME CRÉNEAU TEMPOREL (MUROS)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2010 IN CH13362010**

(43) Date of publication of application:
**20.03.2013 Bulletin 2013/12**

(73) Proprietor: **Samsung Electronics Co., Ltd.
Gyeonggi-do 443-742 (KR)**

(72) Inventors:
 • **GANAPATHI, Sarvesha, Anegundi**
  **Bangalore 560093 (IN)**
 • **JAMADAGNI, Satish, Nanjunda, Swamy**
  **Bangalore 560093 (IN)**
 • **CHOI, Jongsoo**
  **Staines Middlesex TW18 4QE (GB)**

(74) Representative: **Nederlandsch Octrooibureau**
**P.O. Box 29720**
**2502 LS The Hague (NL)**

(56) References cited:
**EP-A2- 2 157 752**     **WO-A1-2010/030399**
**WO-A2-2009/036389**   **WO-A2-2009/076274**
**WO-A2-2009/123540**   **WO-A2-2010/036020**
**KR-A- 20080 053 384**   **US-A1- 2010 067 440**

 • **NOKIA SIEMENS NETWORKS ET AL: "Voice Capacity Evolution", 3GPP DRAFT; GP-071792_VOICE_CAPACITY_EVOLUTION_BY _OSC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Vancouver; 20071109, 9 November 2007 (2007-11-09), XP050019133, [retrieved on 2007-11-09]**

## Description

### Technical Field

The present invention relates to the field of wireless communication, and more particularly relates to allocating timeslots in a multiple users reusing single time slot (MUROS) environment.

### Background Art

With the recent advancement in digital mobile communication systems, various approaches have been developed to allow multiple communication devices to reuse a single timeslot in a frame, referred to as Multiple Users Reusing One Slot (MUROS) technology. For example, MUROS technology allows pairing of two or more communication devices (e.g., up to four) to use one single timeslot to transmit or receive voice signals in the GSM, GPRS, EDGE wireless systems. Theoretically, MUROS technology enhances a cell capacity through pairing two or more communication devices onto a single timeslot. For example, MUROS can at least double voice capacity of the wireless network without requiring additional transmit and receive radio resources (TRX).

The communication devices in the cell should be paired onto a single timeslot in such a way that link quality of any one of the paired communication devices does not see a drastic degradation. For example, if upon pairing, the link quality sees a sudden degradation, then calls associated with the paired communication devices may get dropped. The link quality of the communication devices that are paired mainly depends on bit error rate (BER) and signal to noise (SNR) characteristics of the communication devices.

MUROS capable mobile terminals typically see different interference profiles in uplink and downlink.

WO 2010/036020 discloses a method and system for managing communication in a Multiple User Reusing One time Slot (MUROS) based communication network, selecting a first and a second communication devices from a plurality of communication devices in the communication network, determining a Timing Advance (TA) associated with both devices, identifying their types, and pairing them in a first time slot for establishing communication with the plurality of communication devices.

EP 2 157 752 A2 provides methods of training sequence selection involving optimization in terms of SNR degradation, and it also provides transmitters and receivers encoded with such sequences.

WO 2012/030399 A1 discloses means and instructions for signaling training sequence set information to a remote station to improve DARP by allowing multiple users on one time slot (MUROS).

US 2010/067440 A1 discloses a method and apparatus to improve the quality of control signaling based on signaling messages controlling speech or data transmission over an air interface between at least two Multiple User Reusing One Slot/Voice Services Over Adaptive Multiuser Channels (MUROS/VAMOS) capable wireless transmit/receive units (WTRUs).

WO 2009/076274 A2 discloses a method to facilitate MUROS operation in wireless communications systems, wherein multiple mobile terminals which are allocated the same timeslot use the same pulse format.

### Disclosure of Invention

### Technical Problem

As such, the uplink and downlink pairing scenarios are required to be considered separately as the mobile terminals see different interference profiles.

### Solution to Problem

A method of a base station for allocating timeslots in an uplink channel and a downlink channel in a multiple users reusing one timeslot (MUROS) environment, comprising:

receiving measurement data from a first mobile station over a uplink channel;
evaluating a set of parameters associated with pairing the first mobile station in uplink and downlink respectively based on the measurement data; and
associating a timeslot in a frame between the first mobile station and a second set of mobile stations for uplink data transmission and associating another timeslot in the frame between the first mobile station and a third set of mobile stations for downlink data transmission using the evaluated set of parameters.

An apparatus comprising:

a processor; and

memory coupled to the processor and configured to temporarily store instructions, that when executed by the processor, cause the processor to perform a method comprising:

receiving measurement report data from a first mobile station over a uplink channel;

evaluating a set of parameters associated with pairing the first mobile station in uplink and downlink respectively based on the measurement report data; and

associating a timeslot in a frame between the first mobile station and a second set of mobile stations for uplink data transmission and associating another timeslot in the frame between the first mobile station and a third set of mobile stations for downlink data transmission using the evaluated set of parameters.

## Brief Description of Drawings

Figure 1 is a block diagram illustrating a multiple users reusing one timeslot (MUROS) environment implementing independent pairing of uplink and downlink channels, according to one embodiment.

Figure 2 is a process flowchart illustrating an exemplary method of allocating timeslots in uplink and downlink in the MUROS environment, according to one embodiment.

Figure 3 is a block diagram of the base station showing various components for implementing embodiments of the present subject matter.

## Mode for the Invention

The present invention provides a method and system for allocating timeslots in a multiple users reusing one timeslot (MUROS) environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

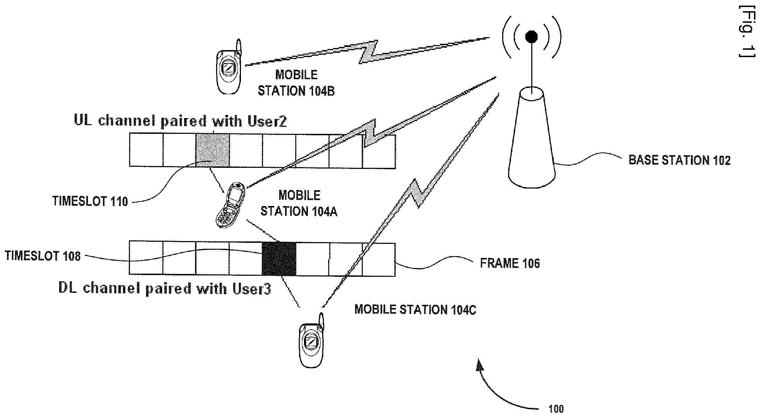

Figure 1 is a block diagram illustrating a MUROS environment 100 implementing independent pairing of uplink and downlink channels, according to one embodiment. In Figure 1, the MUROS environment 100 includes a base station 102, and mobile stations 104A-N connected to the base station 102.

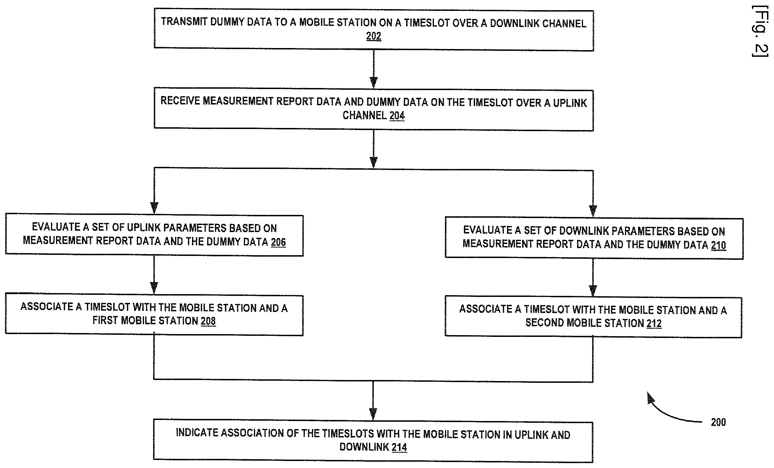

Consider that the mobile station 104A has to be allocated a timeslot in the frame 106. In such case, the base station 102 sends dummy data in the timeslot to the mobile station 104A over a downlink channel. The mobile station 104A, upon receiving the dummy data, monitors the timeslots available in the frame 106 and generates measurement report data. The mobile station 104A sends the dummy data and measurement report data to the base station 102 on the timeslot over an uplink channel. The base station 102 then evaluates downlink pairing criteria and uplink pairing criteria based on the measurement report data and the dummy data. Accordingly, the base station 102 associates a timeslot 108 with the mobile station 104A and the mobile station 104C for downlink data transmission based on downlink pairing criteria. Similarly, the base station 102 associates a timeslot 110 with the mobile station 104A and the mobile station 104B for uplink data transmission based on the uplink pairing criteria. The above process is described in greater detail in Figure 2.

Figure 2 is a process flowchart illustrating an exemplary method of allocating timeslots in uplink and downlink in the MUROS environment 100, according to one embodiment. At step 202, a dummy data is transmitted to a mobile station (e.g., the mobile station 104A) on a timeslot of a frame over a downlink channel. Upon receiving the dummy data, the mobile station 104A monitors one or more timeslots of the frame 106 and generates a measurement report including measurement report data based on monitoring of the timeslots.

At step 204, the measurement report data and the dummy data is received from the mobile station 104A over an uplink channel. At step 206, a set of uplink parameters associated with pairing the uplink channel is evaluated based on the measurement report data and the dummy data. Exemplary uplink parameters (also referred as uplink pairing criteria) may include timing advance, signal-to-noise ratio (SNR), FER, BLER, rank of wireless channel matrix and condition number. At step 208, a timeslot 110 in the frame 106 is associated with the mobile station 104A and the mobile station 104B for uplink data transmission over the uplink channel. For example, the timeslot may be the same or different timeslot on which the dummy data is received in the uplink.

At step 210, a set of downlink parameters associated with pairing the downlink channel is evaluated based on the measurement report data and the dummy data. Exemplary downlink parameters (also referred as uplink pairing criteria) may include timing advance, signal-to-noise ratio (SNR), FER, and BLER. At step 212, a timeslot 108 in the frame 106 is associated with the mobile station 104A and the mobile station 104C for downlink data transmission over the downlink channel.

It can be noted that, the timeslot in the uplink and the downlink can be the same or different and is selected based on ability of the base station 102 and the mobile station 104A to successfully decode uplink data and downlink data. More importantly, the base station 102 determines a timeslot to be allocated for uplink data transmission on the uplink channel based on its ability to decode the dummy data received from the mobile station 104A along with the measurement report data.

In downlink, individual user's decoding performance depends largely on Sub Channel Power Imbalance Ratio (SCPIR) used (e.g., which may depend on type of user). If incorrect SCPIR is used, interference to either of mobile stations from the other paired mobile stations significantly increases, thereby degrading the performance. Also, it is advisable to consider mobile stations with sufficiently high SNR (at least for a subset of users considered for pairing) so that FER after pairing does not increase beyond the threshold so as to result in eventual call drops.

In uplink, paired mobile stations antennas along with the multiple antennas present at the base station 102 form a spatial multiplexing Multiple Input Multiple Output (MIMO) system. A scenario when two users are considered for pairing is given in the following equation.
MathFigure 1

[Math.1]

$$\begin{bmatrix} y1 \\ y2 \end{bmatrix} = \begin{bmatrix} h11 & h12 \\ h21 & h22 \end{bmatrix} \bullet \begin{bmatrix} x1 \\ x2 \end{bmatrix}$$

where, yi indicates received symbol at the receiving antenna i at the base station 102, $h_{ij}$ indicates wireless channel between the $i^{th}$ receiving antenna at the base station102, and the $j^{th}$ user, and xj indicates the transmitted symbol from the $j^{th}$ user.

The performance of such a system depends on the capability of separating and decoding the individual user's streams. This depends on 'Rank' and 'Condition number' of a complex matrix formed by wireless channels ($[h_{ij}]$) between the set of transmitting and receiving antennas along with the SNRs seen. The performance at the base station 102 may improve if users are paired such that the condition number is close to 1 or does not deviate too much from 1. This parameter largely depends on the proximity of the users and the angular separation between the transmitting signals. As the governing parameters which affect the performance are different in downlink and uplink, the uplink and the downlink parameters separately evaluated at the base station 102.

At step 214, the timeslots allocated for the uplink data transmission and the downlink data transmission are indicated to the mobile station 104A such that the mobile station 104A sends and receives the uplink and downlink data on the allocated timeslots 108 and 110. Also, associated frequency hopping sequence for uplink and downlink separately is indicated to the mobile station 104A. The timeslots may be indicated through an enhanced resource allocation message, a channel configuration message, and a handover command message. Exemplary assignment command message indicating allocation of the timeslot is shown below.

Table 1

[Table 1]

| IEI | Information element | Type / Reference | Presence | Format | Length |
|-----|---------------------|------------------|----------|--------|--------|
| | RR managementProtocol Discriminator | Protocol Discriminator10.2 | M | V | ½ |
| | Skip Indicator | Skip Indicator 10.3.1 | M | V | ½ |
| | Assignment command Message Type | Message Type10.4 | M | V | 1 |
| | Description of the First Channel, after time | Channel Description 210.5.2.5a | M | V | 3 |
| | Power Command | Power Command 10.5.2.28 | M | V | 1 |

(continued)

| IEI | Information element | Type / Reference | Presence | Format | Length |
|---|---|---|---|---|---|
| 05 | Frequency List, after time | Frequency List 10.5.2.13 | C | TLV | 4-132 |
| 62 | Cell Channel Description | Cell Channel Description 10.5.2.1b | O | TV | 17 |
| 10 | Description of the multislot configuration | Multislot Allocation 10.5.2.21b | C | TLV | 3-12 |
| 63 | Mode of the First Channel (Channel Set 1) | Channel Mode10.5.2.6 | O | TV | 2 |
| 11 | Mode of Channel Set 2 | Channel Mode10.5.2.6 | O | TV | 2 |
| 13 | Mode of Channel Set 3 | Channel Mode10.5.2.6 | O | TV | 2 |
| 14 | Mode of Channel Set 4 | Channel Mode10.5.2.6 | O | TV | 2 |
| 15 | Mode of Channel Set 5 | Channel Mode10.5.2.6 | O | TV | 2 |
| 16 | Mode of Channel Set 6 | Channel Mode10.5.2.6 | O | TV | 2 |
| 17 | Mode of Channel Set 7 | Channel Mode10.5.2.6 | O | TV | 2 |
| 18 | Mode of Channel Set 8 | Channel Mode10.5.2.6 | O | TV | 2 |
| 64 | Description of the Second Channel, after time | Channel Description 10.5.2.5 | O | TV | 4 |
| 66 | Mode of the Second Channel | Channe 1 Mode 210.5.2.7 | O | TV | 2 |
| 72 | Mobile Allocation, after time | Mobile Allocation 10.5.2.21 | C | TLV | 3-10 |
| 7C | Starting Time | Starting Time 10.5.2.38 | O | TV | 3 |
| 19 | Frequency List, before time | Frequency List 10.5.2.13 | C | TLV | 4-132 |
| 1C | Description of the First Channel, before time | Channel Description 210.5.2.5a | O | TV | 4 |
| 1D | Description of the Second Channel, before time | Channel Description 10.5.2.5 | O | TV | 4 |
| 1E | Frequency channel sequence before time | Frequency channel sequence 10.5.2.12 | C | TV | 10 |
| 21 | Mobile Allocation, before time | Mobile Allocation 10.5.2.21 | C | TLV | 3-10 |
| 9- | Cipher Mode Setting | Cipher Mode Setting 10.5.2.9 | O | TV | 1 |
| 01 | VGCS target mode Indication | VGCS target mode Indication 10.5.2.42a | O | TLV | 3 |
| 03 | Multi-Rate configuration | MultiRate configuration 10.5.2.21aa | O | TLV | 4-8 |
| 04 | VGCS Ciphering Parameters | VGCS Ciphering Parameters 10.5.2.42b | O | TLV | 3-15 |
| | **Description of the UL paired Channel, after time** | **Paired UL Channel Description xx** | **M** | **V** | **3** |
| | **Description of the DL paired Channel, after time** | **Paired DL Channel Description xx** | **M** | **V** | **3** |

Further, exemplary channel description information element is illustrated below table 2 and 3.

Table 2

[Table 2]

Channel type and TDMA offset (octet 2)
Bits
**8 7 6 5 4**
0 0 0 0 0 TCH/F + FACCH/F and SACCH/M at the timeslot indicated by TN, and additional bidirectional or undirectional TCH/Fs and SACCH/Ms according to the multislot allocation information element

0 0 0 0 1 TCH/F + FACCH/F and SACCH/F
0 0 0 1 T TCH/H + ACCHs
0 0 1 T T SDCCH/4 + SACCH/C4 or CBCH (SDCCH/4)
0 1 T T T SDCCH/8 + SACCH/C8 or CBCH (SDCCH/8)

1 1 0 0 0 TCH/F + ACCHs using TSC Set 2
1 1 1 0 T TCH/H + ACCHs using TSC Set 2

The T bits indicate the subchannel number coded in binary.

In the description below "n" is the timeslot number indicated by TN. The description is valid only if all the indicated timeslot numbers are in the range 0 to 7.

1 0 X X X TCH/F + FACCH/F and SACCH/M at the time slot indicated by TN, and additional bidirectional TCH/Fs and SACCH/Ms at other timeslots according to the following:

**X X X:**
0 0 0 no additional timeslots
0 0 1 at timeslot n-1
0 1 0 at timeslot n+1, n-1
0 1 1 at timeslot n+1, n-1 and n-2
1 0 0 at timeslot n+1, n-1, n-2, and n-3
1 0 1 at timeslot n+1, n-1, n-2, n-3 and n-4
1 1 0 at timeslot n+1, n-1, n-2, n-3, n-4 and n-5
1 1 1 at timeslot n+1, n-1, n-2, n-3, n-4, n-5 and n-6

1 1 0 0 1
to
1 1 0 1 1 TCH/F + FACCH/F and SACCH/M at the time slot indicated by TN and additional unidirectional TCH/FDs and SACCH/MDs at other timeslots according to the following:
1 1 0 0 1 at timeslot n-1
1 1 0 1 0 at timeslot n+1, n-1
1 1 0 1 1 at timeslot n+1, n-1 and n-2

1 1 1 1 0 TCH/F + FACCH/F and SACCH/M at the time slot indicated by TN and additional bidirectional TCH/F and SACCH/M at timeslot n+1 and unidirectional TCH/FD and SACCH/MD at timeslot n-1

All other values are reserved.

Table 3

[Table 3]

TN, Timeslot number (octet 2)
The TN field is coded as the binary representation of the timeslot number as defined in 3GPP TS 3GPP TS 45.010.

Range: 0 to 7.

TSC, Training Sequence Code (octet 3)
The TSC field is coded as the binary representation of the Training Sequence code as defined in 3GPP TS 45.002
Unless stated otherwise by coding of 'Channel type and TDMA offset' IE, TSC Set 1 shall be used.

Range: 0 to 7.

H, Hopping channel (octet 3)
Bit
5
0 Single RF channel
1 RF hopping channel

NOTE: The value of H affects the semantics of the channel selector field

Channel selector (octet 3 and 4) H = "0": The channel selector field consists of the absolute RF channel number

Octet 3
Bits
4 3
0 0 Spare

ARFCN, (octet 3, bits 2 and 1, and octet 4, bits 8 to 1)
The ARFCN is coded as the binary representation of the absolute RF channel number

Range: 0 to 1023

H = "1": The channel selector field consists of the mobile allocation index offset, MAIO, and the hopping sequence number, HSN.

MAIO, (octet 3 bit 4 to 1 high part and octet 4 bit 8 to 7 low part)
The MAIO field is coded as the binary representation of the mobile allocation index offset as defined in 3GPP TS 45.002.

Range: 0 to 63.

HSN, (octet 4 bit 6 to 1)
The HSN field is coded as the binary representation of the hopping sequence number as defined in 3GPP TS 45.002
Range 0 to 63.

The base station can assign the same timeslot in the downlink as well as in the uplink for the new mobile station based on the combined evaluation of downlink and uplink parameters so that it can be paired with the best possible incumbent mobile station.

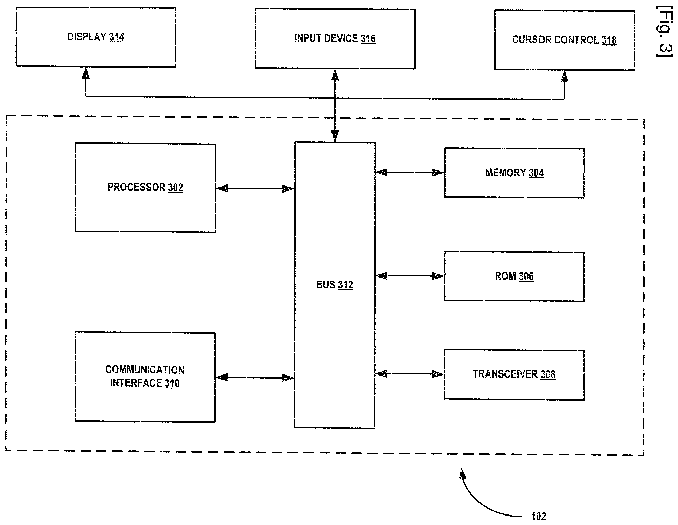

Figure 3 is a block diagram of the base station 102 showing various components for implementing embodiments of the present subject matter. In Figure 3, the base station 102 includes a processor 302, memory 304, a read only memory (ROM) 306, a transceiver 308, a bus 310, a communication interface 312, a display 314, an input device 316, and a cursor control 318.

The processor 302, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 302 may also include embedded controllers, such as generic or programmable logic devices or arrays, application specific integrated circuits, single-chip computers, smart cards, and the like.

The memory 304 and the ROM 306 may be volatile memory and non-volatile memory. The memory 304 includes instructions temporarily stored therein to

allocate timeslots to a mobile station separately in uplink channel and downlink channel, according to the embodiments of the present subject matter. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling memory cards, Memory Sticks™, and the like.

Embodiments of the present subject matter may be implemented in conjunction with modules, including functions, procedures, data structures, and application programs, for performing tasks, or defining abstract data types or low-level hardware contexts. Machine-readable instructions stored on any of the above-mentioned storage media may be executable by the processor 302. For example, a computer program may include machine-readable instructions capable of allocating timeslots to a mobile station in uplink channel and downlink channel separately, according to the teachings and herein described embodiments of the present subject matter. In one embodiment, the program may be included on a storage medium and loaded from the storage medium to a hard drive in the non-volatile memory. The machine-readable instructions may cause the base station 102 to encode according to the various embodiments of the present subject matter.

The bus 310 acts as interconnect between various components of the base station 102. The components such as the transceiver 308, the communication interfaces 312, the display 314, the input device 316, and the cursor control 318 are well known to the person skilled in the art and hence the explanation is thereof omitted.

The present embodiments have been described with reference to specific example embodiments, it will be evident that various modifications and changes may be made to these embodiments without departing from the broader scope of the various embodiments. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1.    A method of a base station for allocating timeslots in an uplink channel and a downlink channel in a multiple users reusing one timeslot, MUROS, environment (100), comprising:

    receiving measurement data from a first mobile station over the uplink channel;
    determining a set of parameters defining the uplink and downlink quality associated with pairing the first mobile station in the uplink channel and the downlink channel, respectively, based on the measurement data (206, 210); and
    associating a first timeslot in a frame between the first mobile station and a second set of mobile stations for uplink data transmission using the determined set of parameters; and
    associating a second timeslot, which is different from the first timeslot, in the frame between the first mobile station and a third set of mobile stations for downlink data transmission based on the determined set of parameters (208, 212).

2.    The method of claim 1, wherein the set of parameters includes a set of downlink parameters and a set of uplink parameters.

3.    The method of claim 2, wherein the set of downlink parameters comprises timing advance, signal-to-noise ratio, SNR, frame error rate, FER, and block error rate, BLER.

4.    The method of claim 2, wherein the set of uplink parameters comprises timing advance, signal-to-noise ratio, SNR, FER, BLER, rank of wireless channel matrix and condition number.

5. The method of claim 1, further comprises: indicating an association of the time slot for the uplink transmission and the second timeslot for the downlink transmission to the first mobile station (214).

6. The method of claim 1, further comprises: indicating a frequency hopping sequence associated with the uplink data transmission and the downlink data transmission respectively.

7. The method of claim 1, wherein receiving the measurement report data from the first mobile station comprises:

sending dummy data(104A) to the first mobile station on a timeslot of the frame over a downlink channel; and receiving the measurement report data and the dummy data from the first mobile station on the timeslot of the frame over the uplink channel(204).

8. An apparatus of a base station for allocating timeslots in an uplink channel and a downlink channel in a multiple users reusing one timeslot, MUROS, environment, comprising:

a processor (302); and
memory (304) coupled to the processor and configured to temporarily store instructions, that when executed by the processor, cause the processor to perform a method comprising:

receiving measurement report data from a first mobile station over the uplink channel;
determining a set of parameters defining the uplink and downlink quality associated with pairing the first mobile station in the uplink channel and the downlink channel, respectively, based on the measurement data (206, 210); and
associating a first timeslot in a frame between the first mobile station and a second set of mobile stations for uplink data transmission using the determined set of parameters; and
associating a second timeslot, which is different from the first time slot, in the frame between the first mobile station and a third set of mobile stations for downlink data transmission based on the determined set of parameters (208, 212).

9. The apparatus of claim 8, wherein the set of parameters includes a set of downlink parameters and a set of uplink parameters.

10. The apparatus of claim 9, wherein the set of downlink parameters comprises timing advance, signal-to-noise ratio SNR), frame error rate, FER, and block error rate, BLER.

11. The apparatus of claim 9, wherein the set of uplink parameters comprises timing advance, signal-to-noise ratio, SNR, frame error rate, FER, block error rate, BLER, rank of wireless channel matrix and condition number.

12. The apparatus of claim 8, wherein the method further comprises: indicating an association of the time slot for the uplink transmission and the second timeslot for the downlink transmission to the first mobile station (214).

13. The apparatus of claim 8, wherein the method further comprises: indicating a frequency hopping sequence associated with the uplink data transmission and the downlink data transmission respectively.

14. The apparatus of claim 8,
wherein receiving the measurement report data from the first mobile station comprises:

sending dummy data to the first mobile station(104A) on a timeslot of the frame over a downlink channel(202); and receiving the measurement report data and the dummy data from the first mobile station on the timeslot of the frame over the uplink channel(204).

**Patentansprüche**

1. Verfahren einer Basisstation zum Zuweisen von Zeitschlitzen in einem Aufwärtsstreckenkanal und einem Abwärtsstreckenkanal in einer Umgebung (100) mit einem von mehreren Nutzern wiederverwendeten Zeitschlitz, MUROS, umfassend:

Empfangen von Messdaten von einer ersten Mobilstation über den Aufwärtsstreckenkanal;

Bestimmen eines Satzes von Parametern, die die Aufwärtsstrecken- und Abwärtsstreckenqualität, die dem Paaren der ersten Mobilstation in dem Aufwärtsstreckenkanal bzw. dem Abwärtsstreckenkanal zugeordnet ist, basierend auf den Messdaten (206, 210) definieren; und

Zuordnen eines ersten Zeitschlitzes in einem Rahmen zwischen der ersten Mobilstation und einem zweiten Satz von Mobilstationen für eine Aufwärtsstreckendatenübertragung unter Verwendung des bestimmten Satzes von Parametern; und

Zuordnen eines zweiten Zeitschlitzes, welcher vom ersten Zeitschlitz verschieden ist, in dem Rahmen zwischen der ersten Mobilstation und einem dritten Satz von Mobilstationen für eine Abwärtsstreckendatenübertragung basierend auf dem bestimmten Satz von Parametern (208, 212).

2. Verfahren nach Anspruch 1, wobei der Satz von Parametern einen Satz von Abwärtsstreckenparametern und einen Satz von Aufwärtsstreckenparametern enthält.

3. Verfahren nach Anspruch 2, wobei der Satz von Abwärtsstreckenparametern Zeitvorverlegung, Signal-Rausch-Verhältnis, SNR, Rahmenfehlerrate, FER, und Blockfehlerrate, BLER, umfasst.

4. Verfahren nach Anspruch 2, wobei der Satz von Aufwärtsstreckenparametern Zeitvorverlegung, Signal-Rausch-Verhältnis, SNR, FER, BLER, Einstufung einer Drahtloskanalmatrix und Zustandsnummer umfasst.

5. Verfahren nach Anspruch 1, ferner umfassend: Anzeigen einer Zuordnung des Zeitschlitzes für die Aufwärtsstreckenübertragung und des zweiten Zeitschlitzes für die Abwärtsstreckenübertragung an die erste Mobilstation (214).

6. Verfahren nach Anspruch 1, ferner umfassend: Anzeigen einer Frequenzsprungsequenz, die der Aufwärtsstreckendatenübertragung bzw. der Abwärtsstreckendatenübertragung zugeordnet ist.

7. Verfahren nach Anspruch 1, wobei das Empfangen der Messberichtsdaten von der ersten Mobilstation umfasst:

Senden von Dummy-Daten (104A) an die erste Mobilstation in einem Zeitschlitz des Rahmens über einen Abwärtsstreckenkanal; und

Empfangen der Messberichtsdaten und der Dummy-Daten von der ersten Mobilstation in dem Zeitschlitz des Rahmens über den Aufwärtsstreckenkanal (204).

8. Vorrichtung einer Basisstation zum Zuweisen von Zeitschlitzen in einem Aufwärtsstreckenkanal und einem Abwärtsstreckenkanal in einer Umgebung mit einem von mehreren Nutzern wiederverwendeten Zeitschlitz, MUROS, umfassend:

einen Prozessor (302); und

einen Speicher (304), der mit dem Prozessor gekoppelt und konfiguriert ist, um Anweisungen temporär zu speichern, die, wenn sie durch den Prozessor ausgeführt werden, den Prozessor dazu veranlassen, ein Verfahren durchzuführen, das umfasst:

Empfangen von Messberichtsdaten von einer ersten Mobilstation über den Aufwärtsstreckenkanal;

Bestimmen eines Satzes von Parametern, die die Aufwärtsstrecken- und Abwärtsstreckenqualität, die dem Paaren der ersten Mobilstation in dem Aufwärtsstreckenkanal bzw. dem Abwärtsstreckenkanal zugeordnet ist, basierend auf den Messdaten (206, 210) definieren; und

Zuordnen eines ersten Zeitschlitzes in einem Rahmen zwischen der ersten Mobilstation und einem zweiten Satz von Mobilstationen für eine Aufwärtsstreckendatenübertragung unter Verwendung des bestimmten Satzes von Parametern; und

Zuordnen eines zweiten Zeitschlitzes, welcher vom ersten Zeitschlitz verschieden ist, in dem Rahmen zwischen der ersten Mobilstation und einem dritten Satz von Mobilstationen für eine Abwärtsstreckendatenübertragung basierend auf dem bestimmten Satz von Parametern (208, 212).

9. Vorrichtung nach Anspruch 8, wobei der Satz von Parametern einen Satz von Abwärtsstreckenparametern und einen Satz von Aufwärtsstreckenparametern enthält.

10. Vorrichtung nach Anspruch 9, wobei der Satz von Abwärtsstreckenparametern Zeitvorverlegung, Signal-Rausch-Verhältnis, SNR, Rahmenfehlerrate, FER, und Blockfehlerrate, BLER, umfasst.

**11.** Vorrichtung nach Anspruch 9, wobei der Satz von Aufwärtsstreckenparametern Zeitvorverlegung, Signal-Rausch-Verhältnis, SNR, Rahmenfehlerrate, FER, Blockfehlerrate, BLER, Einstufung einer Drahtloskanalmatrix und Zustandsnummer umfasst.

**12.** Vorrichtung nach Anspruch 8, wobei das Verfahren ferner umfasst: Anzeigen einer Zuordnung des Zeitschlitzes für die Aufwärtsstreckenübertragung und des zweiten Zeitschlitzes für die Abwärtsstreckenübertragung an die erste Mobilstation (214) .

**13.** Vorrichtung nach Anspruch 8, wobei das Verfahren ferner umfasst: Anzeigen einer Frequenzsprungsequenz, die der Aufwärtsstreckendatenübertragung bzw. der Abwärtsstreckendatenübertragung zugeordnet ist.

**14.** Vorrichtung nach Anspruch 8,
wobei das Empfangen der Messberichtsdaten von der ersten Mobilstation umfasst:

Senden von Dummy-Daten an die erste Mobilstation (104A) in einem Zeitschlitz des Rahmens über einen Abwärtsstreckenkanal (202); und
Empfangen der Messberichtsdaten und der Dummy-Daten von der ersten Mobilstation in dem Zeitschlitz des Rahmens über den Aufwärtsstreckenkanal (204).

## Revendications

**1.** Procédé d'une station de base pour l'allocation de créneaux temporels dans un canal de liaison montante et un canal de liaison descendante dans un environnement à utilisateurs multiples réutilisant un même créneau temporel, MUROS, (100), comprenant :

la réception de données de mesure d'une première station mobile via le canal de liaison montante ;
la détermination d'un ensemble de paramètres définissant la qualité de liaison montante et de liaison descendante associés à l'appariement de la première station mobile respectivement en liaison montante de canal et en liaison descendante de canal sur la base de données de mesure (206, 210) ; et
l'association d'un premier créneau temporel dans une trame entre la première station mobile et un deuxième ensemble de stations mobiles pour la transmission de données en liaison montante en utilisant l'ensemble de paramètres déterminés ; et
l'association d'un deuxième créneau temporel, lequel est différent du premier créneau temporel, dans la trame entre la première station mobile et un troisième ensemble de stations mobiles pour la transmission de données en liaison descendante sur la base de l'ensemble de paramètres déterminés (208, 212).

**2.** Procédé selon la revendication 1, dans lequel l'ensemble de paramètres comprend un ensemble de paramètres de liaison descendante et un ensemble de paramètres de liaison montante.

**3.** Procédé selon la revendication 2, dans lequel l'ensemble de paramètres de liaison descendante comprend l'avance de temps, le rapport signal/bruit, SNR, le taux d'erreur de trame, FER, et le taux d'erreur de bloc, BLER.

**4.** Procédé selon la revendication 2, dans lequel l'ensemble de paramètres de liaison montante comprend l'avance de temps, le rapport signal/bruit, SNR, FER, BLER, le rang de matrice de canal sans fil et le nombre de conditionnement.

**5.** Procédé selon la revendication 1, comprenant en outre : l'indication d'une association du créneau temporel pour la transmission en liaison montante et du deuxième créneau temporel pour la transmission en liaison descendante à la première station mobile (214) .

**6.** Procédé selon la revendication 1, comprenant en outre : l'indication d'une séquence de sauts de fréquence associée respectivement à la transmission de données en liaison montante et la transmission de données en liaison descendante.

**7.** Procédé selon la revendication 1, dans lequel la réception des données de rapport de mesure de la première station mobile comprend :

l'envoi de données factices (104A) à la première station mobile dans un créneau temporel de la trame via un canal de liaison descendante ; et

la réception des données de rapport de mesure et des données factices de la première station mobile dans le créneau temporel de la trame via le canal de liaison montante (204).

**8.** Appareil d'une station de base pour l'allocation de créneaux temporels dans un canal de liaison montante et un canal de liaison descendante dans un environnement à utilisateurs multiples réutilisant un même créneau temporel, MUROS, comprenant :

un processeur (302) ; et

une mémoire (304) couplée au processeur et configurée pour temporairement stocker des instructions lesquelles, lorsque exécutées par le processeur, font en sorte que le processeur mette en oeuvre un procédé comprenant :

la réception de données de rapport de mesure d'une première station mobile via le canal de liaison montante ;

la détermination d'un ensemble de paramètres définissant la qualité de liaison montante et de liaison descendante associés à l'appariement de la première station mobile respectivement en liaison montante de canal et en liaison descendante de canal sur la base des données de mesure (206, 210) ; et

l'association d'un premier créneau temporel dans une trame entre la première station mobile et un deuxième ensemble de stations mobiles pour la transmission de données en liaison montante en utilisant l'ensemble de paramètres déterminés ; et

l'association d'un deuxième créneau temporel, lequel est différent du premier créneau temporel, dans la trame entre la première station mobile et un troisième ensemble de stations mobiles pour la transmission de données en liaison descendante sur la base de l'ensemble de paramètres déterminés (208, 212).

**9.** Appareil selon la revendication 8, dans lequel l'ensemble de paramètres comprend un ensemble de paramètres de liaison descendante et un ensemble de paramètres de liaison montante.

**10.** Appareil selon la revendication 9, dans lequel l'ensemble de paramètres de liaison descendante comprend l'avance de temps, le rapport signal/bruit, SNR, le taux d'erreur de trame, FER, et le taux d'erreur de bloc, BLER.

**11.** Appareil selon la revendication 9, dans lequel l'ensemble de paramètres de liaison montante comprend l'avance de temps, le rapport signal/bruit, SNR, le taux d'erreur de trame, FER, le taux d'erreur de bloc, BLER, le rang de matrice de canal sans fil et le nombre de conditionnement.

**12.** Appareil selon la revendication 8, dans lequel le procédé comprend en outre : l'indication d'une association du créneau temporel pour la transmission en liaison montante et du deuxième créneau temporel pour la transmission en liaison descendante à la première station mobile (214).

**13.** Appareil selon la revendication 8, dans lequel le procédé comprend en outre : l'indication d'une séquence de sauts de fréquence associée respectivement à la transmission de données en liaison montante et la transmission de données en liaison descendante.

**14.** Appareil selon la revendication 8,
dans lequel la réception des données de rapport de mesure de la première station mobile comprend :

l'envoi de données factices à la première station mobile (104A) dans un créneau temporel de la trame via un canal de liaison descendante (202) ; et

la réception des données de rapport de mesure et des données factices de la première station mobile dans le créneau temporel de la trame via le canal de liaison montante (204).

[Fig. 1]

[Fig. 2]

EP 2 569 997 B1

TRANSMIT DUMMY DATA TO A MOBILE STATION ON A TIMESLOT OVER A DOWNLINK CHANNEL 202

RECEIVE MEASUREMENT REPORT DATA AND DUMMY DATA ON THE TIMESLOT OVER A UPLINK CHANNEL 204

EVALUATE A SET OF UPLINK PARAMETERS BASED ON MEASUREMENT REPORT DATA AND THE DUMMY DATA 206

EVALUATE A SET OF DOWNLINK PARAMETERS BASED ON MEASUREMENT REPORT DATA AND THE DUMMY DATA 210

ASSOCIATE A TIMESLOT WITH THE MOBILE STATION AND A FIRST MOBILE STATION 208

ASSOCIATE A TIMESLOT WITH THE MOBILE STATION AND A SECOND MOBILE STATION 212

INDICATE ASSOCIATION OF THE TIMESLOTS WITH THE MOBILE STATION IN UPLINK AND DOWNLINK 214

200

[Fig. 3]

DISPLAY 314

INPUT DEVICE 316

CURSOR CONTROL 318

PROCESSOR 302

BUS 312

MEMORY 304

ROM 306

COMMUNICATION INTERFACE 310

TRANSCEIVER 308

102

EP 2 569 997 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010036020 A
- EP 2157752 A2
- WO 2012030399 A1
- US 2010067440 A1
- WO 2009076274 A2